# NEUE EUROPÄISCHE PATENTSCHRIFT

(11) **EP 0 871 579 B2**
(45) Veröffentlichungstag und Bekanntmachung des Hinweises auf die Entscheidung über den Einspruch: **26.01.2011**
(45) Hinweis auf die Patenterteilung: 02.05.2002
(21) Anmeldenummer: 97943782.9
(22) Anmeldetag: 18.09.1997
(51) Int. Cl.: B60S 1/08

(54) **STEUERVORRICHTUNG FÜR EINEN OPTISCHEN SENSOR**
CONTROL DEVICE FOR AN OPTICAL SENSOR
DISPOSITIF DE COMMANDE POUR UN CAPTEUR OPTIQUE

(30) Priorität: 22.10.1996 DE 19643465
(43) Veröffentlichungstag der Anmeldung: 21.10.1998
(73) Patentinhaber: ROBERT BOSCH GMBH, 70442 Stuttgart (DE)
(72) Erfinder: HOG, Norbert, D-77815 Buehl (DE)
(86) Internationale Anmeldenummer: PCT/DE1997/002097
(87) Internationale Veröffentlichungsnummer: WO 1998/017511

(56) Entgegenhaltungen:
- EP-A- 0 520 302
- DE-U- 9 309 837
- US-A- 4 859 867
- PATENT ABSTRACTS OF JAPAN vol. 016, no. 151 (P-1337), 14.April 1992 & JP 04 005717 A (HITACHI LTD), 9.Januar 1992,

## Beschreibung

### Stand der Technik

Die Erfindung geht aus von einer Steuervorrichtung für einen optischen Sensor nach dem Oberbegriff des Hauptanspruchs. Es ist bereits eine Steuervorrichtung für optische Regensensoren zur Verwendung bei Kraftfahrzeugscheibenwischanlagen bekannt (US 4,859,867), die eine Kompensationsschaltung für Umgebungslicht, Temperatur und andere systemvariablen enthält. Zur Kompensation des Umgebungslichts wird der optische Sender des Regensensors hochfrequent gepulst betrieben. Ein Empfänger detektiert die hochfrequente Ausgangsstrahlung des Senders und liefert modulierte Signale an einen Mikrocontroller, der den Wechselanteil der Signale von dem Gleichanteil der Falschsignale (wie z.B. Umgebungslicht usw.) brennt. Die zur Zeit bevorzugte Frequenz zur Ansteuerung des Senders, in diesem Fall eine Leuchtdiode (LED), liegt bei 1000 Hz. Die bevorzugte Pulsweite beträgt 15 Mikrosekunden. Die im Mikrocontroller ausgewerteten Signale steuern den Wischermotor. Als Nebeneffekt verlängert sich die Lebensdauer der LED gegenüber dem kontinuierlichem Betrieb.

Mit dieser hoben Pulsfrequenz wird jedoch die Lebensdauer nicht genügend verlängert.

Bei Verringerung der Frequenz und gleichbleibender Einschaltzeit des optischen Senders, so daß die Verlängerung der Lebensdauer groß wird, wird es jedoch immer schwieriger, den Wechselanteil von dem Gleichanteil zu trennen. Außerdem würde dann die Reaktionszeit des Sensors bei auftretender Feuchtigkeit in unerwümchter Weise beeinträchtigt.

Aus der EP-A-0 520 302 ist weiters eine Steuervorrichtung für einen Regensensor bekannt, bei dem die Sendeleistung des Senders in 16 Stufen, zur Ausregelung von Scheibentypen, Fertigungstoleranzen, Toleranzen in der Auswerteelektronik, Ansteuerelektronik sowie Alterungseffekten, veränderbar ist.

Weiterhin ist aus der DE-U-93 09 837 eine Steuervorrichtung mit den Merkmalen des Oberbegriff des Anspruchs 1 bekannt.

### Vorteile der Erfindung

Die erfindungsgemäße Steuervorrichtung mit den kennzeichnenden Merkmalen des Hauptanspruchs hat den Vorteil, durch eine Reduzierung der Senderleistung die Lebensdauer des Senders zu erhöhen, ohne die Empfindlichkeit des Regensensors zu beeinträchtigen. Die Lebensdauer des Senders wird damit der Lebensdauer der übrigen elektronischen Bauelements angeglichen und die Lebensdauer des gesamten Sensors wird erhöht.

Durch die in den Unteransprüchen aufgeführten Maßnahmen ergeben sich vorteilhafte Weiterbildungen und Verbesserungen der im Hauptanspruch angegebenen Merkmales.

Ein wesentlicher vorteil ist, daß die Steuervorrichtung des optischen Sensors zwischen Trockonheit und Feuchtigkeit unterscheidet. Bei Trockenheit wird der sender mit reduzierter Leistung und bei Feuchtigkeit wird der Sender mit voller Leistung betrieben.

Bin weitere Vorteil liegt darin, daß die Reduktion der Senderleistung ebenfalls durch einen gepulsten Betrieb des Regensensors erhalten wird.

Besonders vorteilhaft ist hierbei, daß der obere Grenzwert der Periodendauer auf die Reaktionszeit das menschlichen Auges so abgestimmt ist, daß keine Verzögerung wahrnehmbar ist. Äußere Ereignisse dagegen müssen für die Periodendauer nicht berücksichtigt werden, da diese deutlich langsamer ablaufen als die Reaktionszeit, z.B. Regen tropft auf eine Scheibe.

Als weiterer Vorteil ist anzusehen, daß.der Grad der Leistungsreduktion durch andere Parameter wie z.B. Tag oder Nacht variiert werden kann und damit optimal auf die unterschiedliche Bedürfnisse des Kraftfahrzeugfahrers eingestellt werden kann.

Ein Vorteil des gepulsten Betriebs liegt darin, daß der Sensor seine Empfindlichkeit auch während Trockenheit beibehält und bereits geringe Feuchtigkeit erfaßt.

Ein Vorteil der Reduzierung der Senderleistung bei nicht gepulstem Betrieb liegt darin, daß der sensor größere Feuchtigkeit ohne Verzögerung erfaßt.

### Zeichnung

Ausführungsbeispiele der Erfindung sind in der Zeichnung dargestellt und in der nachfolgenden Beschreibung näher erläutert. Es zeigen:
- Figur 1: ein Blockschaltbild bei gepulstem Betrieb des Senders,
- Figur 2: ein Diagramm des Quotienten der am Sender abfallenden Spannungen aufgetragen über die Zeit, bei Vorliegen von Feuchtigkeit oder Trockenheit der Scheibe bei gepulstem Betrieb des Senders,
- Figur 3: ein Blockschaltbild eines zwischen reduzierter und voller Leistung umschaltbaren Senders,
- Figur 4: ein Diagramm des Quotienten der am Sender abfallenden Spannungen aufgetragen über die zeit, bei Vorliegen von Feuchtigkeit oder Trockenheit der Scheibe bei einem zwischen reduzierter und voller Leistung umschaltbaren Sender,
- Figur 5: ein Blockschaltbild zur Schaltung der Steuervorrichtung für einen optischen Sensor in einer Scheibenwischersteuervorrichtung.

### Beschreibung der Ausführungsbeispiele

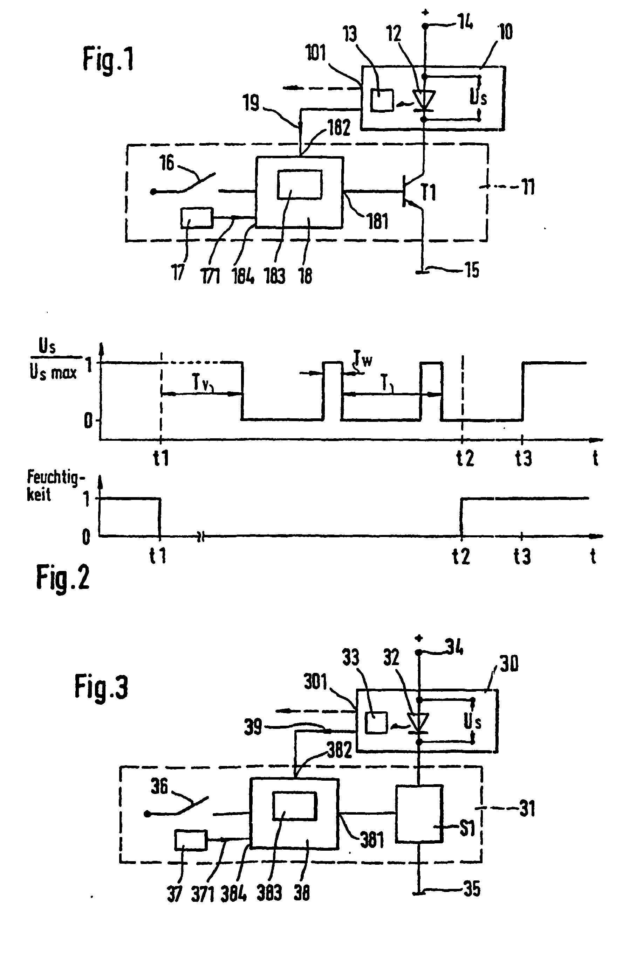

Figur 1 zeigt ein Blockschaltbild einer Steuervorrichtung 11 für einen optischen Regensensor 10, der gepulst betrieben wird. Der Regensensor wird z. B. in Kraftfahrzeugen zur Steuerung eines Frontscheibenwischers verwendet. Die Steuervorrichtung 11 umfaßt eine Steuerung 18 mit Zeitgeber 183, einen Transistor T1 als Leistungsschaltelement, einen Betriebsschalter 16 und einen Tag/Nacht-Erkennungssensor 17. Der Regensensor 10 weist eine Leuchtdiode (LED) als optischen Sender 12 auf und einen Empfänger 13. Der sender 12 wird durch den in Serie angebrachten Transistor T1 geschaltet. Der Pluspol 14 einer Batteriespannung wird über den Sender 12 und den Transistor T1 auf Masse 15 geschaltet. Beim Schließen des Betriebsschalters 16 wird die Steuerung 18 eingeschaltet. Über einen Signalausgang 181 der Steuerung 18 wird der Transistor T1 angesteuert. Das signal am Ausgang 181 hat einen digitalen Verlauf, so daß der Translator T1 gesperrt oder leitend ist. Die Steuerung 18 erhält über einen Signaleingang 182 Meßsignale 19 des Regensensors 10 und über einen weiteren Signaleingang 184 weitere Meßsignale 171 des Tag/Nacht-Erkennuugssensors. Über einen gestrichelt dargestellten Signalausgang 101 des Regensensors 10 wird der nicht dargestellte Scheibenwischer angesteuert. Der Spannungsabfall am Sender 12 wird mit Us bezeichnet.

Die obere Kurve in Figur 2 stellt das Verhältnis des Spannungsabfalls Us zu dem maximalen Spannungsabfall Us, max am Sender 12 dar, aufgetragen über die Zeitachse t. Der dargestellte Kurvenverlauf entspricht dem Ausführungsbeispiel gemäß Figur 1. Der Quotient der Spannungen U_{S}/U_{S,max} nimmt die Werte null oder eins an. Die Zeitachse t ist unterteilt in drei Bereiche t < t1, t1 < t < t2 und t > t2. Gemäß der unteren Kurve in Figur 2 liegt vor t1 und nach t2 Feuchtigkeit vor. In der Zeit zwischen t1 und t2 ist keine Feuchtigkeit vorhanden. Demzufolge wird der Sender 12 nur bei trockener Scheibe durch ein entsprechendes Meßsiganl 19 am Eingang 182 von der Steuervorrichtung 11 gepulst angesteuert, bei feuchter Scheibe dagegen kontinuierlich.

Die Wirkungsweise der erfindungsgemäßen Steuervorrichtung für einen optischen Regensensor nach Figur 1 wird anhand der Figur 2 nunmehr näher erläutert :

Bei Feuchtigkeit auf der Scheibe wird T1 leitend gesteuert und der Sender 12 mit voller Leistung betrieben. Der Spannungsabfall Us am Sender 12 ist maximal und der Quotient der Spannungen nimmt den Wert eins an. Solange Feuchtigkeit vorhanden ist, bleibt dieser Zustand erhalten. Dies ist in Figur 2 bei t < t1 zu erkennen.

Ist die Scheibe trocken (t > t1), dann wird nach einer durch den Zeitgeber 183 vorgegebenen Zeit Tv von ca. zwei Minuten, in der der Sender 12 noch mit voller Leistung betrieben wird, die Senderleistung über T1 gepulst. In der vorgegebenen Zeit Tv ist die Empfindlichkeit des Sensors 10 maximal, so daß bei kurzfristig einsetzenden Schauern (unter Aprilwetter bekannt) der sensor voll betriebsbereit bleibt. Nach der vorgegebenen Zeit Tv wird der Sender 12 mit einer Periodendauer T von 500 Millisekunden und einer Pulsweite Tw von 10 Millisekunden gepulst. Die Steuerung 16 generiert hierzu ein entsprechendes Signal für den Transistor T1. Der Quotient der Spannungen am Sender 12 nimmt zwischen den pulsen den Wert null und während der Pulsweite Tw den Wert eins an.

Zu bemerken ist, das die Zeitachse in Figur 2 unterschiedliche Maßstäbe aufweist: Die vorgegebene Zeit Tv kann z.B. zwei Minuten oder mehr betragen, im Gegensatz zur Periodendauer T, die lediglich 0,5 Sekunden andauert.

In den Zeiträumen, in denen der Quotient der Spannungen null wird, beträgt der Spannungsabfall Us am Sender 12 ebenfalls null, d. h. T1 ist gesperrt und der sender 12 ist ausgeschaltet. Wenn in diesen Zeitspannen nun Feuchtigkeit einsetzt (t = t2), wird dies nicht sogleich vom Sensor 10 erfaßt. Erst wenn der Sender 12 wieder mit voller Empfindlichkeit arbeitet (t = t3) kann der Sensor 10 die Feuchtigkeit detektieren. Durch die Rückkopplung des Sensors 10 über das Meßsignal 19 mit der Steuerung 18 beendet die Steuerung 18 den gepulsten Betrieb und der Sender 12 wird über den Schalter T1 dauerhaft mit voller Empfindlichkeit aktiviert. Gleichzeitig wird bei t = t3 ein erster Wischvorgang der Scheibenwischer (hier nicht dargestellt) über den angedeuteten Signalausgang 101 aktiviert. Anschließend werden die Wischvorgänge in Abhängigkeit der durch den Regensensors 10 detektierten Feuchtigkeitsmenge über den Signalausgang 101 aufgelöst.

Die Wahl der Periodendauer T richtet sich nach der Reaktionszeit des menschlichen Auges. Die Reaktionszeit beträgt durchschnittlich ca. 500 Millisekunden. Sobald die Periodendauer T größer ist als die Reaktionszeit, gewinnt der Fahrer des Kraftfahrzeugs den Eindruck, daß die Steuerungsvorrichtung zu langsam reagiert. Die Trägheit des menschlichen Brfassungsvermögens setzt damit der Periodendauer T eine obere Grenze. Da die Reaktionszeit allerdings durch z.B. Witterung, Dunkelheit oder Müdigkeit des Fahrers größer wird, kann die obere Grenze bei einer Sekunde liegen. Um den Einfluß der Dunkelheit zusätzlich zu erfassen, ist es denkbar. Meßsignale 171 eines Tag/Nacht - Erkennungssensors 17 über einen weiteren Eingang 184 der Steuerung 18 zuzuführen, um die Periodendauer T bei Dunkelheit zu vergrößern.

Eine untere Grenze der Periodendauer T der gepulsten Strahlung ist bei unveränderter Pulsweiten Tw von zehn Millisekunden durch die Zielsetzung gegeben, die Lebensdauer des Senders 12 zu erhöhen. Wird die Periodendauer T kurz gewählt, dann erhöht sich die Modulationsfrequenz und die Leistungsaufnahme des Senders 12 steigt. Dies wirkt sich dann negativ auf die Lebensdauer des Senders 12 aus. Die untere Grenze kann beispielsweise bei 100 Millisekunden liegen.

Die Pulsweite Tw von ca. zehn Millisekunden ergibt sich aufgrund meßtechnischer Zwecke. Häufig wird der Sender 12 eines Regensensors 10 zusätzlich mit einer hochfrequenten Modulation, wie bereits eingangs erwähnt, überlagert, die eine Periodendauer von einigen Millisekunden oder weniger aufweist. Um ein Stören der hochfrequenten Modulation zu verhindern, sollte die Pulsweite Tw größer als die Periodendauer der hochfrequenten Modulation gewählt werden.

Figur 3 zeigt ein Blockschaltbild einer Steuervorrichtung 31 für einen optischen Regensensor 30, dessen Senderleistung umschaltbar ist. Die Steuervorrichtung 31 umfaßt eine Steuerung 38 mit Zeitgeber 383, eine regelbare Stromsenke S1, einen Betriebsschalter 36 und einen Tag/Nacht-Erkennungssensor 37. Der Regensensor weist eine Leuchtdiode als optischen Sender 32 und einen Empfänger 33 auf. Der Sender 32 wird mit der regelbaren Stromsenke 33 in Serie geschaltet und an einen Pluspol 34 einer Batteriespannung und an Masse 35 gelegt. Die Stromsenke S1 wird über einen Steuerausgang 381 der Steuerung 38 gesteuert. Die Steuerung 38 erhält über einen Signaleingang 382 Meßsignale 39 des Regensensors 30 und über einen weiteren Signaleingang 384 weitere Meßsignale 371 des Tag/Nacht-Erkennungssensors 37. Weiterhin ist die Steuerung 38 mit einem Betriebsschalter 36 verbunden. Der Regensensor 30 weist einen gestrichelt angedeuteten weiteren Signalausgang 301 auf, über den ein nicht dargestellter Scheibenwischer angesteuert wird.

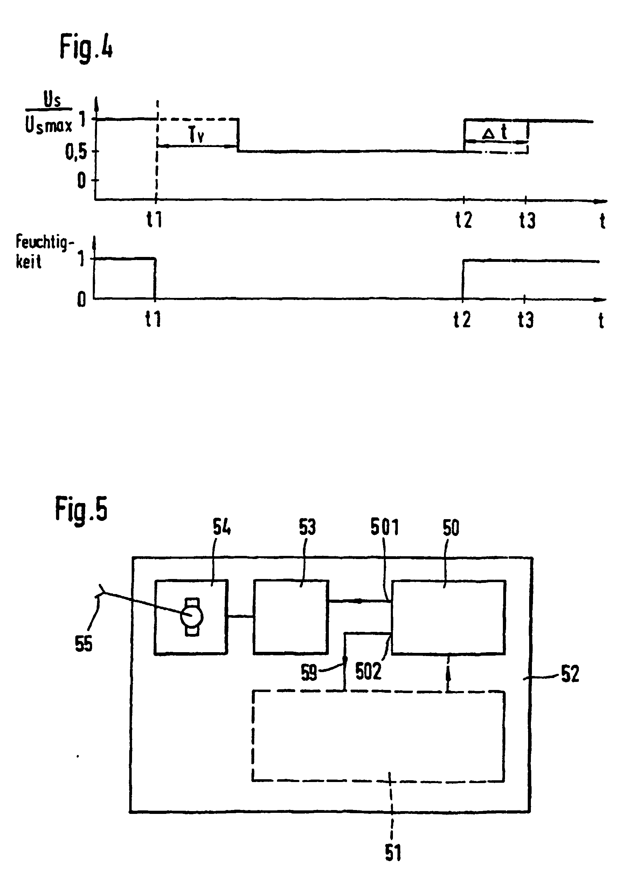

Figur 4 stellt, ebenso wie Figur 2, das Verhältnis des Spannungsabfalls Us am Sender 32 zu dem maximalen Spannungsabfall Us,max am Sender 32 und das Vorhandensein von Feuchtigkeit dar, aufgetragen über die Zeitachse t. Der dargestellte Kurvenverlauf entspricht dem Ausführungsbeispiel gemäß Figur 3. Der Quotient kann Werte von null bis eins annehmen. In diesem Ausführungsbeispiel nimmt der Quotient die Werte 0,5 oder eins an.

Die Wirkungsweise der erfindungsgemäßen Steuervorrichtung für einen optischen Regensensor nach Figur 3 wird anhand der Figur 4 nunmehr näher erläutert:

Bei Feuchtigkeit wird der Sender 32 über die Stromsenke S1 mit voller Leistung betrieben. Der Spannungsabfall Us am Sender 32 ist maximal und der Quotient der Spannungen Us/Us,max nimmt den Wert eins an. Dies ist in Figur 4 bei t < t1 zu erkenne.

Detektiert der Sensor 30 keine Feuchtigkeit mehr (t = t1) dann wird nach einer durch den Zeitgeber 383 vorgegebenen zeit Tv, beispielsweise zwei Minuten, der Sender 32 mit reduzierter Leistung betrieben. Dafür wird ein entsprechendes Steuersignal der Steuerung 38 an die regelbare Stromsenke S1 gelegt. Der Stromfluß durch den Sender 32 wird reduziert, so daß die abfallende Spannung Us am Sender 32 z. B. halbiert und die Leistung des Senders 32 ebenfalls reduziert wird. Der Quotient der Spannungen nimmt einen durch die Steuerung 38 einstellbaren Wert von 0,5 an. Die Empfindlichkeit des Regensensors nimmt ab.

Setzt Niederschlag ein (t = t2), erfaßt der Regensensor 30 ohne erkennbare Verzögerung die Feuchtigkeit und gibt das Meßsignal 39 an die Steuerung 38. Die Steuerung 38 schaltet über die Stromsenke S1 den Sender 32 auf volle Leistung und löst einen ersten Mischvorgang der Scheibenwischer (hier nicht dargestellt) aus. Die zukünftige Wischrate des Scheibenwischers wird aufgrund der Feuchtigkeitsmenge, die durch den mit nun voller Empfindlichkeit betriebenen Regensensor erfaßt wird, automatisch bestimmt (t > t2).

Bei geringem Niederschlag erfaßt der Regensensor 30 die Feuchtigkeit nicht sofort, da die Empfindlichkeit des Regensensors 30 reduziert ist. Erst bei Aufsummierung der Feuchtigkeit auf der Scheibe bis zur Detektierbarkeit durch den Regensensor 30, kann das Meßsignal 39 in der Steuerung 38 den Betrieb des Regensensors 30 mit voller Empfindlichkeit auslösen. Dies geschieht zum Zeitpunkt t = t3. In Figur 4 ist dieser Fall durch die gestrichpunktete Linie angedeutet. Die Zeitspanne Δt = t3 - t2 ist u.a. abhängig von der Empfindlichkeitseinstellung des Regensensors durch die reduzierte Leistung und der Feuchtigkeitsmenge bzw. der Niederschlagsart.

Der Reduktionsgrad der Senderleistung kann durch die Steuerung 38 fest vorgegeben werden oder durch äußere Parameter beeinflußt werden. So z. B. ist es sinnvoll in Kombination mit einem Tag/Nacht-Erkennungssensor die Empfindlichkeit des Senders 32 bei Trockenheit der Scheiben nachts höher einzustellen als tagsüber.

Der Sender 12 eines Regensensors 10 kann ebenfalls zusätzlich mit einer eingangs erwähnten hochfrequenten Modulation überlagert werden, die eine Periodendauer von einigen Millisekunden oder weniger aufweist.

Figur 5 zeigt ein Blockschaltbild einer Scheibenwischersteuervorrichtung 52 mit Steuervorrichtung 51, Regensensor 50, Steuereinrichtung 53 für einen Wischermotor 54 sowie Wischermotor 54 und einen durch den Wischermotor 54 angetriebenen Scheibenwischer 55. Der Regensensor 50 weist zwei Ausgänge auf 501, 502, wobei über den einen Ausgang 502 Meßsignale 59 an die Steuervorrichtung 51 gegeben werden und über den anderen Ausgang 501 gleiche Meßsignale 59 an die Steuereinrichtung 53 des Wischermotors 54 gegeben werden.

Die durch den Regensensor detektierte Feuchtigkeit oder Trockenheit einer nicht dargestellten Windschutzscheibe eines Kraftfahrzeugs, wird als Meßsignal 59 einerseits an die Steuerungsvorrichtung 51 des Regensensors 50 geleitet. Aufgrund dieses Meßsignales 59 schaltet die Steuervorrichtung 51 den Sender des Regensensors 50 auf volle oder reduzierte Leistung, wobei unter reduzierter Leistung ebenfalls der gepulste Betrieb des Regensensors 50 erfaßt wird. Die Wirkungsweise der Steuervorrichtung 51 für den Regensensor 50 läßt sich den vorgenannten Ausführungsbeispielen entnehmen. Dieselben Meßsignale 59 werden über den Ausgang 501 einer Steuereinrichtung 53 zugeführt, die in bekannte Weise automatisch in Abhängigkeit der Feuchtigkeitssignale 59 den Wischermotor 54 ansteuert und den Scheibenwischer 55 betreibt. Es ist nicht unbedingt erforderlich, daß der Regensensor 50 zwei Ausgänge 501, 502 aufweist. Ein Ausgang 502 ist ausreichend, wenn das Meßsignal 59 der Steuervorrichtung 51 und der Steuereinrichtung 53 zugeführt wird.

## Patentansprüche

1. Steuervorrichtung (11, 31) für einen optischen Sensor, insbesondere einem Regensensor (10, 30) zur vorzugsweisen Verwendung bei Kraftfahrzeug-Scheibenwischanlagen, der feuchtigkeitsabhängige Messsignale (19, 39) abzugeben vermag und einen optischen Sender (12, 32), vorzugsweise eine Leuchtdiode, aufweist wobei die Senderleistung in Abhängigkeit des Messsignales (19, 39) des Sensors (10, 30) zwischen voller Leistung und reduzierter Leistung umschaltbar ist, **dadurch gekennzeichnet, dass** abhängig von dem Messsignal (19, 39) bei Trockenheit der Seheibe (t1< t < t2) erst nach einer vorgegebenen Zeit (Tv) der Sender (12, 32) mit reduzierter Senderleistung zu betreiben ist und bei detektierter Feuchtigkeit (t < t1, t > t2bzw. t > t3), insbesondere nach einem ersten Wischvorgang, der Sender (12, 32) mit voller Leistung zu betreiben ist.

2. Steuervorrichtung (11, 31) nach Anspruch 1, **dadurch gekennzeichnet, dass** die vorgegebene Zeit (Tv) durch die Steuerung (18, 38) vorgegeben ist oder durch Parameter, wie z. B. durch eine Tag/Nacht-Erkennung beeinflussbar ist

3. Scheibenwischersteuervorrichtung (52) mit einen durch eine Steuereinrichtung (53) gesteuerten Wischermotor (54), der einen Scheibenwischer (53) antreibt, insbesondere einen Kraftfahrzeugscheibenwischer, mit einer Steuervorrichtung (11, 31, 51) für einen optischen Sensor, insbesondere für einen Regensensor (10, 30, 50), **dadurch gekennzeichnet, dass** die Steuervorrichtung (11, 31, 51) nach einem der Ansprüche 1 bis 2 aufgebaut ist.

## Claims

1. Control device (11, 31) for an optical sensor, in particular a rain sensor (10, 30) preferably for use in motor vehicle screen wiper systems, which can emit moisture-dependent measurement signals (19, 39) and has an optical transmitter (12, 32), preferably a light-emitting diode, wherein the transmitter power can be switched between full power and reduced power in a manner dependent on the measurement signal (19, 39) of the sensor (10, 30), **characterized in that** depending on the measurement signal (19, 39), in the event of the screen being dry (t1<t<t2) the transmitter (12, 32) is to be operated with reduced transmitter power only after a predetermined time (Tv) and, in the event of detected moisture (t<t1, t>t2 or t>t3), in particular after a first wiping operation, the transmitter (12, 32) is to be operated with full power.

2. Control device (11, 31) according to Claim 1, **characterized in that** the predetermined time (Tv) is predetermined by the controller (18, 38) or can be influenced by parameters, such as e.g. by a day/night identification.

3. Screen wiper control device (52) having a wiper motor (54), which is controlled by a control unit (53) and drives a screen wiper (53), in particular a motor vehicle screen wiper, having a control device (11, 31, 51) for an optical sensor, in particular for a rain sensor (10, 30, 50), **characterized in that** the control device (11, 31, 51) is constructed according to either of Claims 1 and 2.

## Revendications

1. Dispositif de commande (11, 31) d'un détecteur optique, en particulier d'un détecteur de pluie (10, 30) destiné à être utilisé de préférence sur les installations d'essuie-glace de véhicules automobiles, capable de délivrer des signaux de mesure (19, 39) qui dépendent de l'humidité et présentant un émetteur optique (12, 32), de préférence une diode luminescente, dont la puissance d'émission peut être commutée entre un état de pleine puissance et un état de puissance réduite en fonction du signal de mesure (19, 39) du détecteur (10, 30),
**caractérisé en ce qu'**en fonction du signal de mesure (19, 39), lorsque la vitre est sèche (t1 < t < t2), l'émetteur (12, 32) doit être utilisé à puissance d'émission réduite après une durée prédéterminée (Tv) et au cas où de l'humidité est détectée (t < t1, t > t2 ou t > t3), en particulier après une première opération de balayage, l'émetteur (12, 32) doit être utilisé à pleine puissance.

2. Dispositif de commande (11, 31) selon la revendication 1, **caractérisé en ce que** la durée prédéterminée (Tv) est prédéterminée par la commande (18, 38) ou peut être modifiée par des paramètres, par exemple par une détection jour-nuit.

3. Dispositif (52) de commande d'essuie-glace doté d'un moteur d'essuie-glace (54) commandé par un dispositif de commande (53), entraînant un essuie-glace (53), en particulier un essuie-glace de véhicule automobile, et doté d'un dispositif de commande (11, 31, 51) d'un détecteur optique, en particulier d'un détecteur de pluie (10, 30, 50), **caractérisé en ce que** le dispositif de commande (11, 31, 51) est constitué selon l'une des revendications 1 et 2.
